# EUROPEAN PATENT SPECIFICATION

(11) **EP 3 432 107 B1**
(45) Date of publication and mention of the grant of the patent: **07.04.2021**
(21) Application number: 18168932.4
(22) Date of filing: 04.06.2018
(51) Int. Cl.: G05D 1/02, G06T 7/00

(54) **CLEANING ROBOT AND CONTROLLING METHOD THEREOF**
REINIGUNGSROBOTER UND STEUERUNGSVERFAHREN DAFÜR
NETTOYEUR AUTONOM ET SON PROCÉDÉ DE COMMANDE

(30) Priority: 21.07.2017 KR 20170092903
(43) Date of publication of application: 23.01.2019
(73) Proprietor: LG Electronics Inc., Yeongdeungpo-Gu Seoul 07336 (KR)
(72) Inventor: KIM, Hyunji, Seoul 08592 (KR)
(74) Representative: Ter Meer Steinmeister & Partner

(56) References cited:
- WO-A1-2016/005011
- DE-A1-102005 015 826
- US-A1- 2009 161 911
- US-A1- 2011 243 383

## Description

### BACKGROUND OF THE INVENTION

### 1. Field of the invention

The present disclosure relates to a vacuum cleaner and a control method thereof, and more particularly, to a vacuum cleaner capable of recognizing an obstacle and performing autonomous traveling, and a control method thereof.

### 2. Description of the related art

In general, robots have been developed for industrial use and have been part of factory automation. In recent years, the field of application of robots has been expanded, and medical robots, aerospace robots, and the like have been developed, and household robots that can be used in ordinary homes have also been made.

A representative example of the household robot is a robot cleaner, which is a type of household appliance that sucks and cleans dust or foreign matter around the robot while traveling in a certain area by itself. Such a robot cleaner is generally provided with a rechargeable battery, and provided with an obstacle sensor that can avoid an obstacle while traveling so that it can move and clean by itself.

In recent years, research has been actively carried out to use the robot cleaner in various fields such as health care, smart home, remote control, and the like, apart from merely autonomously traveling in a cleaning area to perform a cleaning operation.

In particular, the robot cleaner may not only perform a cleaning function, but may also provide an internal image of a user's home, which is a cleaning area, when the user is out of home. In other words, the user of the robot cleaner may receive an image captured by a camera of the robot cleaner in real time, thereby check whether or not there is any threat factor in his or her home.

Such a function of the robot cleaner is defined as monitoring traveling.

In the case of a typical robot cleaner, images are continuously transmitted to the user when monitoring traveling is initiated, but no longer transmitted when monitoring traveling is finished.

Therefore, a user of a typical robot cleaner may receive a surveillance image from the robot cleaner only when executing a predetermined application that executes monitoring traveling in the user terminal, and thus when the application screen is not displayed on the terminal, there is a problem that the user cannot recognize the occurrence of a dangerous situation even when the dangerous situation occurs in a cleaning area.

In addition, a typical robot cleaner may not determine whether or not the captured images need to be delivered to the user during monitoring traveling, and thus the user continuously receives unnecessary images, thereby causing inconvenience to the user.

In this regard, Korean Patent No. 10-2677252 (published on Mar. 28, 2006) discloses a remote monitoring system including a robot cleaner for capturing indoors while traveling on a preset patrol route to output the captured video signal, and a network connection means for transmitting the video signal output from the robot cleaner to a user terminal via an Internet network or a mobile communication network.

However, a remote monitoring system according to Korean Patent No. 10-2677252 may merely transmit an image captured in a specific area to a user terminal, and such a remote monitoring system may not solve the problem of monitoring traveling in the related art.

WO 2016/005011 A1 relates to a robotic cleaning device and a method for the robotic cleaning device of facilitating detection of objects from captured images.

DE 10 2005 015826 A1 relates to a method for an optical detection of a surface of contact pads before and after contacting of the pads through a contact unit to generate a reference image (R) and an image which is to be analyzed. Difference between the images is established to generate an output image.

On the other hand, with the recent development of deep learning technology, there is a need for a data processing method of a robot cleaner to which the deep learning technology is applied. A robot cleaner mounted with deep learning technology may strengthen artificial intelligent elements as compared with a robot cleaner in the related art, thereby implementing a complicated data processing method that has not been carried out in the robot cleaner in the related art.

### SUMMARY OF THE INVENTION

In order to solve the foregoing problems, a technical task of the present disclosure is to provide a cleaner capable of selecting information required to be checked by a user, and delivering the selected information to a user, and a control method thereof.

Furthermore, an object of the present disclosure is to provide a cleaner for combining monitoring traveling with a deep learning algorithm to perform autonomous traveling which can transmit an optimal surveillance image to a user, and a control method thereof.

In addition, another object of the present disclosure is to provide a cleaner mounted with a machine learning function performing autonomous traveling to gradually improve the monitoring performance of the cleaner without being limited to an initial performance of the cleaner designed by a designer or a user, and a control method thereof.

Moreover, still another object of the present disclosure is to provide a cleaner mounted with a machine learning function to improve monitoring performance as a monitoring history of the cleaner is accumulated, and a control method thereof.

The above identified objectives are solved by the features of the independent claim. Advantageous embodiments are derived from the respective dependent claims.

The following examples/aspects/embodiments are not according to the invention and are present for illustration purposes only. The invention as such is set forth in the independent claim. In order to solve the foregoing technical tasks of the present disclosure, a cleaner for performing autonomous traveling according to the present disclosure may include a main body, a driving unit configured to move the main body, a camera configured to capture an image related to a cleaning area around the main body at preset intervals, a memory configured to store information related to a preset deep learning algorithm for analyzing the image, and a controller configured to detect a difference between a first image and a second image consecutively captured by the camera, generate a third image based on the detected difference, and analyze the generated third image using a preset deep learning algorithm.

According to an embodiment, the main body may include the cleaner body and the body of the suction unit.

Preferably, the controller may be adapted to transmit a result of the analyzing of a difference detected between a plurality of images to a user terminal.

According to an embodiment, the controller may detect information related to a subject of the third image using the deep learning algorithm.

According to an embodiment, the memory may store training data for the analysis of the image, and the controller may determine a degree of similarity between a plurality of image information included in the training data and the third image using the deep learning algorithm, and detect information related to a subject of the third image based on the determined degree of similarity.

According to an embodiment, the cleaner may further include a communication unit configured to perform communication with the outside, wherein the controller controls the communication unit to transmit information related to a subject of the third image to at least one of a server and a user terminal when it is determined that the subject of the third image is a person or an animal.

According to an embodiment, the controller may control the communication unit to transmit a warning message to the user terminal when it is determined that the subject of the third image is a person or an animal.

According to an embodiment, the controller may further include an input configured to receive a user input, wherein the controller controls the memory to store at least one fourth image based on the user input, and determines whether or not the subject of the third image corresponds to any one of the fourth images stored in the memory when it is determined that the subject of the third image is a person or an animal.

According to an embodiment, the controller may cancel a process of transmitting information related to the subject of the third image to the server and the user terminal when it is determined that the subject of the third image corresponds to any one of the fourth images stored in the memory.

According to an embodiment, the controller may resume an operation mode that has been carried out by the cleaner prior to capturing the first and second images when the process of transmitting information related to the subject of the third image to the server and the user terminal is canceled.

According to an embodiment, the controller may control the camera to capture a new image when the process of transmitting information related to the subject of the third image to the server and the user terminal is canceled.

According to an embodiment, the at least one fourth image may include at least one of an image related to a user of the cleaner, and an image related to an animal allowed to exist in the cleaning area.

According to an embodiment, the controller may control the communication unit to transmit information related to a subject of the third image to at least one of a server and a user terminal when it is determined that the subject of the third image is an object obstructing the driving of the cleaner.

According to an embodiment, the controller may control the communication unit to transmit information related to a subject of the third image to at least one of a server and a user terminal when it is determined that the subject of the third image is a flame or smoke generated in the cleaning area.

According to an embodiment, when it is determined that the subject of the third image is a window or door existing in the cleaning area, the controller may compare the first and second images to determine whether or not the open or closed state of the window or door has been changed.

According to an embodiment, the controller may control the communication unit to transmit at least one of the first through third images to at least one of a server and a user terminal when it is determined that the open or closed state of the window or door has been changed.

According to an embodiment, the controller may compare a region in which water is captured in the first image with a region in which water is captured in the second image when a subject of the third image is water existing in the cleaning area.

According to an embodiment, the controller may determine that a water overflow has occurred in the cleaning area when a size of the region in which the water is captured in the first image and a size of the region in which the water is captured in the second image exceed a preset reference value.

According to an embodiment, the controller may control the communication unit to transmit at least one of the first through third images to at least one of a server and a user terminal when it is determined that a water overflow has occurred in the cleaning area.

According to an embodiment, the controller may control the camera to capture a new image when it is determined that the subject of the third image is an object that does not affect the driving of the cleaner.

According to an embodiment, the controller may control the camera to capture a new image when it is determined that a difference between the first image and the second image is due to a change in an amount of light irradiated to the cleaning area.

According to an embodiment, the controller may control the camera to capture a new image when it is determined that the subject of the third image is a shadow.

According to the present disclosure, only selected information may be delivered to the user, thereby obtaining an effect of improving the quality of monitoring traveling.

Furthermore, according to the present disclosure, monitoring traveling may be combined with a deep learning algorithm to transmit an optimal surveillance image to a user, thereby improving user convenience.

In addition, according to the present disclosure, the cleaner may perform machine learning, thereby obtaining an effect of monitoring a cleaning area without being limited to the performance at the time of fabrication or design.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a perspective view illustrating an example of a cleaner that performs autonomous traveling according to the present disclosure;
FIG. 2 is a plan view illustrating the cleaner that performs autonomous traveling illustrated in FIG. 1;
FIG. 3 is a side view illustrating the cleaner that performs autonomous traveling illustrated in FIG. 1;
FIG. 4 is a block diagram illustrating the components of a cleaner that performs autonomous traveling according to an embodiment of the present disclosure;
FIG. 5 is a conceptual view illustrating a system of a cleaner that performs autonomous traveling according to an embodiment of the present disclosure;
FIG. 6 is a flowchart illustrating a control method of a cleaner that performs autonomous traveling according to an embodiment of the present disclosure;
FIG. 7 is a conceptual view illustrating a method of detecting a difference between a plurality of images by a cleaner that performs autonomous traveling according to an embodiment of the present disclosure;
FIGS. 8A and 8B are conceptual views illustrating that a cleaner performing autonomous traveling according to an embodiment of the present disclosure transmits a result of analyzing a difference detected between a plurality of images to a user terminal;
FIG. 9 is a flowchart illustrating a control method of a cleaner that performs autonomous traveling according to an embodiment of the present disclosure;
FIGS. 10A through 10C are conceptual views illustrating a method of analyzing a difference between a plurality of images by a cleaner that performs autonomous traveling according to an embodiment of the present disclosure; and
FIG. 11 is a conceptual view illustrating a method of analyzing a difference between a plurality of images by a cleaner that performs autonomous traveling according to an embodiment of the present disclosure.

### DETAILED DESCRIPTION OF THE INVENTION

Hereinafter, an embodiment disclosed herein will be described in detail with reference to the accompanying drawings, and it should be noted that technological terms used herein are merely used to describe a specific embodiment, but not limitative to the concept of the present disclosure.

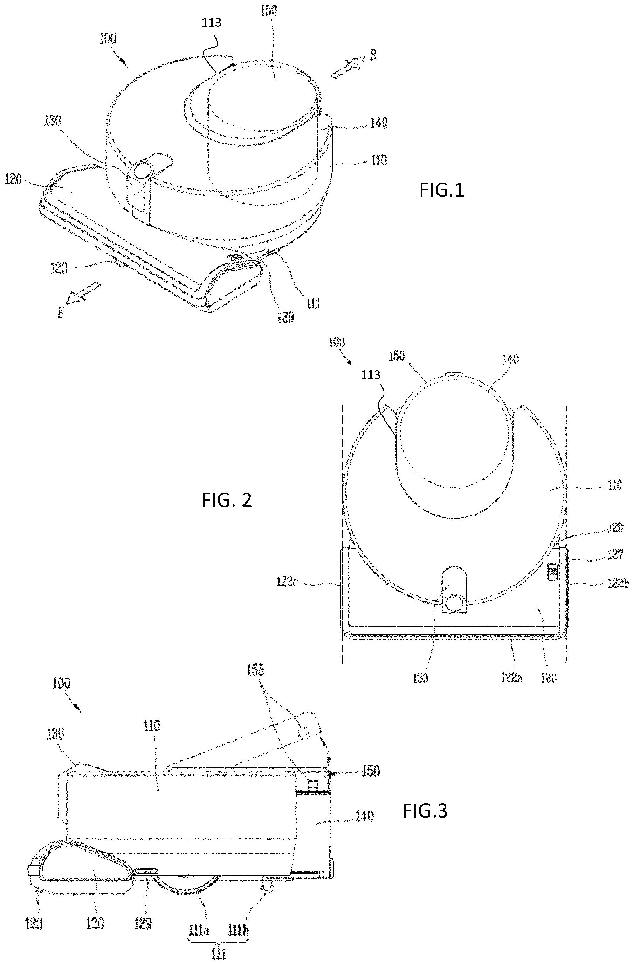

FIG. 1 is a perspective view illustrating an example of a robot cleaner 100 according to the present disclosure, FIG. 2 is a plan view of the robot cleaner 100 illustrated in FIG. 1, and FIG. 3 is a side view of the robot cleaner 100 illustrated in FIG. 1.

For reference, in this specification, a mobile robot, a robot cleaner, and a cleaner that performs autonomous traveling may be used in the same sense.

Referring to FIGS. 1 through 3, the robot cleaner 100 performs a function of cleaning a floor while traveling on a predetermined area by itself. Cleaning of a floor mentioned here includes sucking dust (including foreign matter) on the floor or mopping the floor.

The robot cleaner 100 includes a cleaner body 110, a suction unit 120, a sensing unit 130, and a dust box 140. In its simplest form the sensing unit 130 may include a camera.

The cleaner body 110 is provided with a controller (not shown) for the control of the robot cleaner 100 and a wheel unit 111 for the traveling of the robot cleaner 100. The robot cleaner 100 may move forward, backward, leftward and rightward by the wheel unit 111.

The wheel unit 111 includes main wheels 111a and a sub wheel 111b.

The main wheels 111a are provided on both sides of the cleaner body 110 and configured to be rotatable in one direction or another direction according to a control signal of the controller. Each of the main wheels 111a may be configured to be drivable independently from each other. For example, each main wheel 111a may be driven by a different motor.

The sub wheel 111b is configured to support the cleaner body 110 along with the main wheel 111a and assist the traveling of the robot cleaner 100 by the main wheel 111a. The sub wheel 111b may also be provided in the suction unit 120 which will be described later.

As described above, the controller is configured to control the driving of the wheel unit 111 in such a manner that the robot cleaner 100 autonomously travels on the floor.

Meanwhile, a battery (not shown) for supplying power to the robot cleaner 100 is mounted on the cleaner body 110. The battery may be configured to be rechargeable, and configured to be detachable from a bottom portion of the cleaner body 110.

The suction unit 120 is disposed to protrude from one side of the cleaner body 110 to suck air containing dust. The one side may be a side on which the cleaner body 110 travels in a forward direction (F), that is, a front side of the cleaner body 110.

In the present drawing, it is shown that the suction unit 120 is protruded from one side of the cleaner body 110 to a front side and both left and right sides thereof. A front end portion of the suction unit 120 is disposed at a position spaced forward from one side of the cleaner body 110 and both left and right end portions of the suction unit 120 are disposed at positions spaced apart from one side of the cleaner body 110 to both left and right sides thereof.

As the cleaner body 110 is formed in a circular shape, and both ends of a rear end portion of the suction unit 120 are formed to protrude from the cleaner body 110 to both left and right sides thereof, a vacant space, namely, a gap, may be formed between the cleaner body 110 and the suction unit 120. The vacant space is a space between both left and right end portions of the cleaner body 110 and both left and right end portions of the suction unit 120, and has a shape recessed in an inward direction of the robot cleaner 100.

When an obstacle is caught in the vacant space, the robot cleaner 100 may be blocked by an obstacle not to move. In order to prevent this, a cover member 129 may be disposed to cover at least part of the vacant space. The cover member 129 may be provided in the cleaner body 110 or the suction unit 120. According to the present embodiment, it is shown that the cover member 129 is formed in a protruding manner on both sides of a rear end portion of the suction unit 120, and disposed to cover an outer peripheral surface of the cleaner body 110.

The cover member 129 is disposed to fill at least part of the vacant space, that is, a vacant space between the cleaner body 110 and the suction unit 120. Therefore, it may be possible to implement a structure capable of preventing an obstacle from being caught in the vacant space, or being easily released from the obstacle even when the obstacle is caught in the vacant space.

The cover member 129 formed to protrude from the suction unit 120 may be supported on an outer circumferential surface of the cleaner body 110. If the cover member 129 is formed in a protruding manner from the cleaner body 110, then the cover member 129 may be supported on a rear portion of the suction unit 120. According to the above structure, when the suction unit 120 collides with an obstacle to receive an impact, part of the impact may be transmitted to the cleaner body 110 to disperse the impact.

The suction unit 120 may be detachably coupled to the cleaner body 110. When the suction unit 120 is separated from the cleaner body 110, a mop module (not shown) may be detachably coupled to the cleaner body 110 in place of the separated suction unit 120. Accordingly, the suction unit 120 may be mounted on the cleaner body 110 when the user wants to remove dust on the floor, and a mop module may be mounted on the cleaner body 110 when the user wants to mop the floor.

When the suction unit 120 is mounted on the cleaner body 110, the mounting may be guided by the cover member 129 described above. In other words, the cover member 129 may be disposed to cover an outer circumferential surface of the cleaner body 110, thereby determining a relative position of the suction unit 120 with respect to the cleaner body 110.

The sensing unit 130 is disposed in the cleaner body 110. The sensing unit 130 may be disposed at one side of the cleaner body 110 where the suction unit 120 is located, that is, in front of the cleaner body 110.

The sensing unit 130 may be disposed to overlap with the suction unit 120 in a vertical direction of the cleaner body 110. The sensing unit 130 is disposed at an upper portion of the suction unit 120 to sense an obstacle or geographic feature in front of the suction unit 120 so that the suction unit 120 positioned at the forefront of the robot cleaner 100 does not collide with the obstacle.

The sensing unit 130 is configured to additionally perform another sensing function in addition to the sensing function. It will be described in detail later.

The cleaner body 110 is provided with a dust box accommodation portion 113, and the dust box 140 for separating dust from the air sucked to collect the dust is detachably coupled to the dust box accommodation portion 113. As illustrated in the drawing, the dust box accommodation portion 113 may be formed on the other side of the cleaner body 110, namely, behind the cleaner body 110.

A part of the dust box 140 is accommodated in the dust box accommodation portion 113 and another part of the dust box 140 is formed to protrude toward a rear side of the cleaner body 110 (i.e., a reverse direction (R) opposite to a forward direction (F)).

The dust box 140 is formed with an inlet through which air containing dust is introduced and an outlet through which air separated from dust is discharged, and when the dust box 140 is installed in the dust box accommodation portion 113, the inlet and the outlet are configured to communicate with a first opening and a second opening formed in an inner wall of the dust box accommodation portion 113, respectively.

The intake passage in the cleaner body 110 corresponds to a passage from the inlet port (not shown) communicating with the communicating portion 120b to the first opening, and the discharge passage corresponds to a passage from the second opening to the discharge port 112.

According to such a connection relation, air containing dust introduced through the suction unit 120 is introduced into the dust box 140 through an intake air passage in the cleaner body 110, and air and dust are separated from each other as they pass through a filter or cyclone of the dust box 140. Dust is collected in the dust box 140, and air is discharged from the dust box 140 and then discharged to the outside through the discharge port 112 in the cleaner body 110 and finally through the discharge port 112.

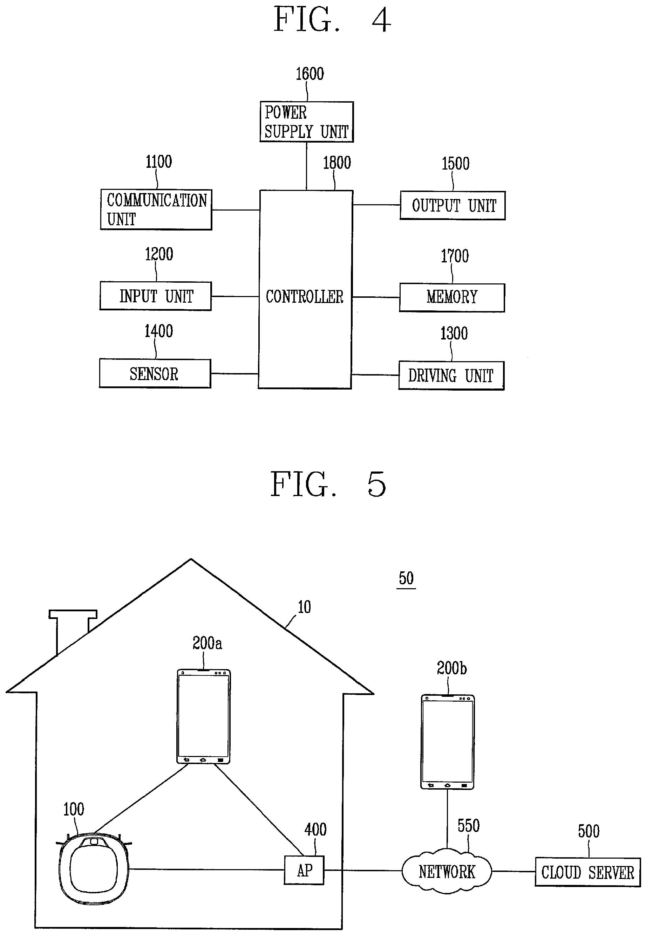

An embodiment related to the components of the robot cleaner 100 will be described below with reference to FIG. 4.

The robot cleaner 100 or mobile robot according to an embodiment of the present disclosure may include at least one of a communication unit 1100, an input unit 1200, a driving unit 1300, a sensing unit 1400, an output unit 1500, a power supply unit 1600, a memory 1700 and a controller 1800, or a combination thereof.

Here, it is needless to say that the components shown in FIG. 4 are not essential, and thus a robot cleaner having more or fewer components than shown in FIG. 4 may be implemented. Hereinafter, each component will be described.

First, the power supply unit 1600 includes a battery that can be charged by an external commercial power source to supply power to the mobile robot. The power supply unit 1600 supplies driving power to each of the components included in the mobile robot to supply operating power required for the mobile robot to travel or perform a specific function.

Here, the controller 1800 may sense the remaining power of the battery, and control the battery 1800 to move power to a charging base connected to the external commercial power source when the remaining power is insufficient, and thus a charge current may be supplied from the charging base to charge the battery. The battery may be connected to a battery sensing unit, and a battery remaining amount and a charging state may be delivered to the controller 1800. The output unit 1500 may display the battery remaining amount on the screen by the controller.

The battery may be located in a lower portion of the center of the robot cleaner or may be located at either one of the left and right sides. In the latter case, the mobile robot may further include a balance weight for eliminating a weight bias of the battery.

The controller 1800 performs a role of processing information based on an artificial intelligence technology and may include at least one module for performing at least one of learning of information, inference of information, perception of information, and processing of a natural language.

The controller 1800 may use a machine learning technology to perform at least one of learning, inference and processing of a large amount of information (big data), such as information stored in the cleaner, environment information around the mobile terminal, information stored in a communicable external storage, and the like. Furthermore, the controller 1800 may predict (or infer) at least one executable operation of the cleaner based on information learned using the machine learning technology, and control the cleaner to execute the most feasible operation among the at least one predicted operation.

The machine learning technology is a technology that collects and learns a large amount of information based on at least one algorithm, and determines and predicts information based on the learned information. The learning of information is an operation of grasping characteristics of information, rules and judgment criteria, quantifying a relation between information and information, and predicting new data using the quantified patterns.

Algorithms used by the machine learning technology may be algorithms based on statistics, for example, a decision tree that uses a tree structure type as a prediction model, an artificial neural network that mimics neural network structures and functions of living creatures, genetic programming based on biological evolutionary algorithms, clustering of distributing observed examples to a subset of clusters, a Monte Carlo method of computing function values as probability using randomly-extracted random numbers, and the like.

As one field of the machine learning technology, deep learning is a technology of performing at least one of learning, determining, and processing information using a deep neural network (DNN) algorithm. The deep neural network (DNN) may have a structure of linking layers and transferring data between the layers. This deep learning technology may be employed to learn a vast amount of information through the deep neural network (DNN) using a graphic processing unit (GPU) optimized for parallel computing.

The controller 1800 may use training data stored in an external server or a memory, and may include a learning engine for detecting a characteristic for recognizing a predetermined object. Here, characteristics for recognizing an object may include the size, shape, and shade of the object.

Specifically, when the controller inputs a part of an image acquired through the camera provided in the cleaner to a learning engine, the learning engine may recognize at least one object or creature included in the input image.

In this way, when the learning engine is applied to the traveling of the cleaner, the controller 1800 may recognize whether or not there exists an obstacle that obstructs the traveling of the cleaner, such as a chair leg, a fan, a specific type of balcony gap, or the like, thereby enhancing the efficiency and reliability of the traveling of the cleaner.

Meanwhile, the learning engine as described above may be mounted on the controller 1800 or may be mounted on an external server. When the learning engine is mounted on an external server, the controller 1800 may control the communication unit 1100 to transmit at least one image that is subjected to analysis to the external server.

The external server may input an image received from the cleaner to the learning engine, thereby recognizing at least one object or creature included in the relevant image. In addition, the external server may transmit information related to the recognition result back to the cleaner. Here, the information related to the recognition result may include information related to a number of objects, a name of each object, included in the image that is subjected to analysis.

On the other hand, the driving unit 1300 may be provided with a motor to drive the motor, thereby rotating the left and right main wheels in both directions to rotate or move the main body. The driving unit 1300 may allow the main body of the mobile robot to move forward, backward, leftward and rightward, travel in a curved manner or rotate in place.

Meanwhile, the input unit 1200 receives various control commands for the robot cleaner from the user. The input unit 1200 may include one or more buttons, for example, the input unit 1200 may include an OK button, a set button, and the like. The OK button is a button for receiving a command for confirming sensing information, obstacle information, position information, and map information from the user, and the set button is a button for receiving a command for setting the information from the user.

In addition, the input unit 1200 may include an input reset button for canceling a previous user input and receiving a user input again, a delete button for deleting a preset user input, a button for setting or changing an operation mode, a button for receiving a command to be restored to the charging base, and the like.

Furthermore, the input unit 1200, such as a hard key, a soft key, a touch pad, or the like, may be installed on a upper portion of the mobile robot. In addition, the input unit 1200 may have a form of a touch screen along with the output unit 1500.

On the other hand, the output unit 1500 may be installed on an upper portion of the mobile robot. Of course, the installation location and installation type may vary. For example, the output unit 1500 may display a battery state, a traveling mode, and the like on the screen.

In addition, the output unit 1500 may output state information inside the mobile robot detected by the sensing unit 1400, for example, a current state of each configuration included in the mobile robot. Moreover, the output unit 1500 may display external state information, obstacle information, position information, map information, and the like detected by the sensing unit 1400 on the screen. The output unit 1500 may be formed with any one of a light emitting diode (LED), a liquid crystal display (LCD), a plasma display panel, and an organic light emitting diode (OLED).

The output unit 1500 may further include a sound output device for audibly outputting an operation process or an operation result of the mobile robot performed by the controller 1800. For example, the output unit 1500 may output a warning sound to the outside in accordance with a warning signal generated by the controller 1800.

Here, the sound output device may be a device for outputting sound such as a beeper, a speaker, or the like, and the output unit 1500 may output the sound to the outside through the sound output device using audio data or message data having a predetermined pattern stored in the memory 1700.

Accordingly, the mobile robot according to an embodiment of the present disclosure may output environment information on a traveling area on the screen or output it as sound. According to another embodiment, the mobile robot may transmit map information or environment information to a terminal device through the communication unit 1100 to output a screen or sound to be output through the output unit 1500.

On the other hand, the communication unit 1100 is connected to the terminal device and/or another device (mixed with term "home appliance" in this specification) located in a specific area in one of wired, wireless, satellite communication methods to transmit and receive signals and data.

The communication unit 1100 may transmit and receive data with another located in a specific area. Here, the another device may be any device capable of connecting to a network to transmit and receive data, and for example, the device may be an air conditioner, a heating device, an air purification device, a lamp, a TV, an automobile, or the like. Furthermore, the another device may be a device for controlling a door, a window, a water valve, a gas valve, or the like. The another device may be a sensor for sensing temperature, humidity, air pressure, gas, or the like.

On the other hand, the memory 1700 stores a control program for controlling or driving the robot cleaner and the resultant data. The memory 1700 may store audio information, image information, obstacle information, position information, map information, and the like. Furthermore, the memory 1700 may store information related to a traveling pattern.

The memory 1700 mainly uses a non-volatile memory. Here, the non-volatile memory (NVM, NVRAM) is a storage device capable of continuously storing information even when power is not supplied thereto, and for an example, the non-volatile memory may be a ROM, a flash memory, a magnetic computer storage device (e.g., a hard disk, a diskette drive, a magnetic tape), an optical disk drive, a magnetic RAM, a PRAM, and the like.

Meanwhile, the sensing unit 1400 may include at least one of an external signal detection sensor, a front detection sensor, a cliff detection sensor, a two-dimensional camera sensor, and a three-dimensional camera sensor.

The external signal detection sensor may sense an external signal of the mobile robot. The external signal detection sensor may be, for example, an infrared ray sensor, an ultrasonic sensor, an radio frequency (RF) sensor, or the like.

The mobile robot may receive a guide signal generated by the charging base using the external signal detection sensor to check the position and direction of the charging base. At this time, the charging base may transmit a guide signal indicating the direction and the distance to allow the mobile robot to return. In other words, the mobile robot may receive a signal transmitted from the charging base to determine a current position, set a moving direction, and return to the charging base.

On the other hand, the front detection sensor may be installed at predetermined intervals at a front side of the mobile robot, specifically along a lateral outer circumferential surface of the mobile robot. The front detection sensor is located at least on one side of the mobile robot to sense an obstacle in front of the mobile robot, and the front detection sensor may sense an object, especially an obstacle, which exists in a moving direction of the mobile robot to transmit the detection information to the controller 1800. In other words, the front detection sensor may sense a protrusion on the moving path of the mobile robot, a household appliance, a furniture, a wall, a wall corner, and the like, and transmit the information to the controller 1800.

The front detection sensor may be, for example, an infrared sensor, an ultrasonic sensor, an RF sensor, a geomagnetic sensor, or the like, and the mobile robot may use one type of sensor or two or more types of sensors for the front detection sensor.

For an example, the ultrasonic sensors may be mainly used to sense a distant obstacle in general. The ultrasonic sensor may include a transmitter and a receiver, and the controller 1800 may determine whether or not there exists an obstacle based on whether or not ultrasonic waves radiated through the transmitter is reflected by the obstacle or the like and received at the receiver, and calculate a distance to the obstacle using the ultrasonic emission time and ultrasonic reception time.

Furthermore, the controller 1800 may compare ultrasonic waves emitted from the transmitter and ultrasonic waves received at the receiver to detect information related to a size of the obstacle. For example, the controller 1800 may determine that the larger the obstacle is, the more ultrasonic waves are received at the receiver.

In one embodiment, a plurality of (for example, five) ultrasonic sensors may be provided along a lateral outer circumferential surface at a front side of the mobile robot. Here, preferably, for the ultrasonic sensors, transmitters and receivers may be alternately installed on a front surface of the mobile robot.

In other words, the transmitters may be spaced apart from the front center of the main body to the left and right sides, and one or two (or more) transmitters may be disposed between the receivers to form a receiving area of ultrasonic signals reflected from an obstacle or the like. With this arrangement, the receiving area may be expanded while reducing the number of sensors. A transmission angle of ultrasonic waves may maintain a range of angles that do not affect different signals to prevent a crosstalk phenomenon. Furthermore, the receiving sensitivities of the receivers may be set to be different from each other.

In addition, the ultrasonic sensor may be installed upward by a predetermined angle to output ultrasonic waves transmitted from the ultrasonic sensor in an upward direction, and here, the ultrasonic sensor may further include a predetermined blocking member to prevent ultrasonic waves from being radiated downward.

On the other hand, as described above, the front detection sensor may use two or more types of sensors together, and accordingly, the front detection sensor may use any one type of infrared sensors, ultrasonic sensors, RF sensors, and the like.

For an example, the front detection sensor may include an infrared sensor as a different type of sensor other than the ultrasonic sensor.

The infrared sensor may be installed on an outer circumferential surface of the mobile robot together with the ultrasonic sensor. The infrared sensor may also sense an obstacle existing at the front or the side to transmit obstacle information to the controller 1800. In other words, the infrared sensor may sense a protrusion on the moving path of the mobile robot, a household appliance, a furniture, a wall, a wall corner, and the like, and transmit the information to the controller 1800. Therefore, the mobile robot may move within a specific region without collision with the obstacle.

On the other hand, a cliff detection sensor (or cliff sensor) may sense an obstacle on the floor supporting the main body of the mobile robot mainly using various types of optical sensors.

In other words, the cliff detection sensor may be installed on a rear surface of the bottom mobile robot, but may of course be installed in a different position depending on the type of the mobile robot. The cliff detection sensor is a sensor located on a back surface of the mobile robot to sense an obstacle on the floor, and the cliff detection sensor may be an infrared sensor, an ultrasonic sensor, an RF sensor, a PSD (Position Sensitive Detector) sensor, or the like, which is provided with a transmitter and a receiver such as the obstacle detection sensor.

For an example, any one of the cliff detection sensors may be installed in front of the mobile robot, and the other two cliff detection sensors may be installed relatively behind.

For example, the cliff detection sensor may be a PSD sensor, but may also be configured with a plurality of different kinds of sensors.

The PSD sensor detects a short and long distance position of incident light with one p-n junction using a semiconductor surface resistance. The PSD sensor includes a one-dimensional PSD sensor for detecting light in only one direction and a two-dimensional PSD sensor for detecting a light position on a plane, all of which may have a pin photodiode structure. The PSD sensor is a type of infrared sensor that uses infrared rays to transmit infrared rays and then measure an angle of infrared rays reflected from and returned back to an obstacle so as to measure a distance. In other words, the PSD sensor uses a triangulation method to calculate a distance to the obstacle.

The PSD sensor has a light emitting unit that emits infrared rays to an obstacle, and a light receiving unit that receives infrared rays reflected from and returned to the obstacle. When an obstacle is sensed using the PSD sensor, a stable measurement value may be obtained irrespective of the reflectance and the color difference of the obstacle.

The controller 1800 may measure an infrared angle between an emission signal of infrared rays emitted from the cliff detection sensor toward the ground and a reflection signal reflected and received by the obstacle to sense a cliff and analyze the depth thereof.

On the other hand, the controller 1800 may determine whether or not to pass according to the ground state of the sensed cliff using the cliff detection sensor, and determine whether or not to pass through the cliff according to the determination result. For example, the controller 1800 determines whether or not a cliff is present and a depth of the cliff through the cliff detection sensor, and then passes through the cliff only when a reflection signal is sensed through the cliff detection sensor.

For another example, the controller 1800 may determine a lifting phenomenon of the mobile robot using the cliff detection sensor.

On the other hand, the two-dimensional camera sensor is provided on one side of the mobile robot to acquire image information related to the surroundings of the main body during movement.

An optical flow sensor converts a downward image input from an image sensor provided in the sensor to generate image data in a predetermined format. The generated image data may be stored in the memory 1700.

Furthermore, one or more light sources may be installed adjacent to the optical flow sensor. The one or more light sources irradiate light to a predetermined region of the bottom surface captured by the image sensor. In other words, when the mobile robot moves in a specific region along the bottom surface, a predetermined distance is maintained between the image sensor and the bottom surface when the bottom surface is flat. On the other hand, when the mobile robot moves on a bottom surface having a nonuniform surface, the robot moves away from the bottom surface by more than a predetermined distance due to the irregularities of the bottom surface and obstacles. At this time, the one or more light sources may be controlled by the controller 1800 to adjust an amount of light to be irradiated. The light source may be a light emitting device capable of controlling the amount of light, for example, a light emitting diode (LED) or the like.

Using the optical flow sensor, the controller 1800 may detect a position of the mobile robot irrespective of the slip of the mobile robot. The controller 1800 may compare and analyze the image data captured by the optical flow sensor over time to calculate the moving distance and the moving direction, and calculate the position of the mobile robot on the basis of the moving distance and the moving direction. Using image information on a bottom side of the mobile robot using the optical flow sensor, the controller 1800 may perform slip-resistant correction on the position of the mobile robot calculated by another device.

The three-dimensional camera sensor may be attached to one side or a part of the main body of the mobile robot to generate three-dimensional coordinate information related to the surroundings of the main body.

In other words, the three-dimensional camera sensor may be a 3D depth camera that calculates a near and far distance of the mobile robot and an object to be captured.

Specifically, the three-dimensional camera sensor may capture a two-dimensional image related to the surroundings of the main body, and generate a plurality of three-dimensional coordinate information corresponding to the captured two-dimensional image.

In an embodiment, the three-dimensional camera sensor may include two or more cameras that acquire a conventional two-dimensional image, and may be formed in a stereo vision manner to combine two or more images obtained from the two or more cameras so as to generate three-dimensional coordinate information.

Specifically, the three-dimensional camera sensor according to the embodiment may include a first pattern irradiation unit for irradiating light with a first pattern in a downward direction toward the front of the main body, and a second pattern irradiation unit for irradiating the light with a second pattern in an upward direction toward the front of the main body, and an image acquisition unit for acquiring an image in front of the main body. As a result, the image acquisition unit may acquire an image of a region where light of the first pattern and light of the second pattern are incident.

In another embodiment, the three-dimensional camera sensor may include an infrared ray pattern emission unit for irradiating an infrared ray pattern together with a single camera, and capture the shape of the infrared ray pattern irradiated from the infrared ray pattern emission unit onto the object to be captured, thereby measuring a distance between the sensor and the object to be captured. Such a three-dimensional camera sensor may be an IR (infrared) type three-dimensional camera sensor.

In still another embodiment, the three-dimensional camera sensor may include a light emitting unit that emits light together with a single camera, receive a part of laser emitted from the light emitting unit reflected from the object to be captured, and analyze the received laser, thereby measuring a distance between the three-dimensional camera sensor and the object to be captured. The three-dimensional camera sensor may be a time-of-flight (TOF) type three-dimensional camera sensor.

Specifically, the laser of the above-described three-dimensional camera sensor is configured to irradiate a laser beam in the form of extending in at least one direction. In one example, the three-dimensional camera sensor may include first and second lasers, wherein the first laser irradiates a linear shaped laser intersecting each other, and the second laser irradiates a single linear shaped laser. According to this, the lowermost laser is used to sense obstacles in the bottom portion, the uppermost laser is used to sense obstacles in the upper portion, and the intermediate laser between the lowermost laser and the uppermost laser is used to sense obstacles in the middle portion.

A system including a cleaner that performs autonomous traveling according to an embodiment of the present disclosure will be described below with reference to FIG. 5.

Referring to FIG. 5, a robot cleaning system 50 according to an embodiment of the present disclosure may include a cleaner 100, an AP device 400, a server 500, a network 550, mobile terminals 200a, 200b.

The cleaner 100, the AP device 400, the mobile terminals 600a, and the like may be disposed in a building 10 such as a house.

The cleaner 100, as a vacuum cleaner configured to clean automatically, performs automatic traveling and automatic cleaning. On the other hand, the cleaner 100 may include a communication unit 1100 in addition to a traveling function and a cleaning function, and exchange data with electronic devices in an internal network 10 or electronic devices accessible through an external network 550. To this end, the communication unit 1100 may perform data exchange with the AP device 400 in a wired or wireless manner.

An access point (AP) device 400 may provide an internal network 10 to an electric device adjacent thereto. In particular, a wireless network may be provided.

On the other hand, the AP device 400 may allocate a wireless channel according to a predetermined communication method to the electronic devices in the internal network 10, and perform wireless data communication through the relevant channel. Here, the predetermined communication method may be a WiFi communication method.

At this time, the mobile terminal 600b located in the internal network 10 may be connected to the cleaner 100 through the AP device 400 to perform monitoring, remote control, and the like with respect to the cleaner 100.

Meanwhile, the AP device 400 may perform data communication with an external electronic device through the external network 550 in addition to the internal network 10.

For example, the AP device 400 may perform wireless data communication with the mobile terminal 200a located at the outside through the external network 550.

At this time, the mobile terminal 200a located in the external network 550 may access the cleaner 100 through the external network 550 and the AP apparatus 400 to perform monitoring, remote control, and the like for the cleaner 100.

For another example, the AP device 400 may perform wireless data communication with the server 500 located at the outside through the external network 550.

The server 500 may include a voice recognition algorithm. Furthermore, while receiving voice data, the received voice data may be converted into text format data to output the text format data.

Meanwhile, the server 500 may store firmware information, driving information (course information, and the like) for the cleaner 100, and register product information on the cleaner 100. For example, the server 500 may be a server operated by the manufacturer of the cleaner 100. For another example, the server 500 may be a server operated by a published application store operator.

On the other hand, contrary to the drawing, the server 500 may be a home server provided at home to store state information on home appliances at home, or store contents shared by home appliances at home. When the server 500 is a home server, it may store information related to foreign matter, for example, a foreign matter image, and the like.

Meanwhile, the cleaner 100 according to an embodiment of the present disclosure may capture an image including foreign matter through a camera provided therein, and transmit an image including foreign matter and image related information to the mobile terminal 200 or the server 500, or cleaning the surroundings of foreign matter based on cleaning execution information on foreign matter from the mobile terminal 200 or the server 500 or may not clean the surroundings of foreign matter based on cleaning avoidance information on foreign matter. As a result, cleaning may be selectively carried out on the foreign matter.

On the other hand, according to another embodiment of the present disclosure, the cleaner 100 may capture an image including foreign matter through a stereo camera provided therein, and perform signal processing on an image including foreign matter acquired from the stereo camera to identify an object related to foreign matter within the image, and generate cleaning execution information or cleaning avoidance information on the foreign matter based on the object related to the identified foreign matter, thereby cleaning the surroundings of the foreign matter based on the cleaning execution information or not cleaning the surroundings of the foreign matter based on the cleaning avoidance information As a result, cleaning may be selectively carried out on the foreign matter.

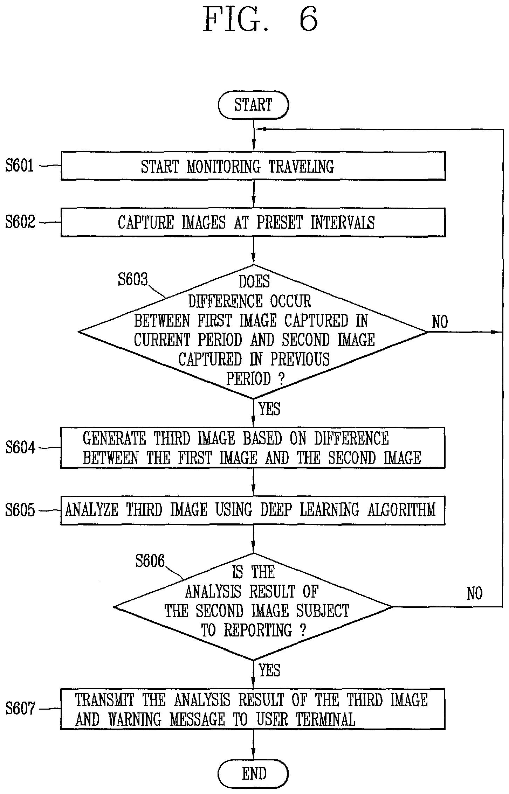

A control method of the cleaner 100 according to the present disclosure will be described below with reference to FIG. 6.

Referring to FIG. 6, the cleaner 100 may start monitoring traveling (S601).

For example, when a control command for starting monitoring traveling is received from the user terminal, the cleaner 100 may start monitoring traveling.

For another example, the cleaner 100 may start monitoring traveling when a user input is applied to a button (not shown) provided in the cleaner body.

For still another example, the cleaner 100 may start monitoring traveling when entering a preset time zone.

For yet still another example, the cleaner 100 may start monitoring traveling when it is determined that a dangerous situation has occurred in the vicinity of the main body.

In particular, various embodiments in which the cleaner 100 senses a dangerous situation are described as follows.

In an embodiment, the controller 1800 may determine that a dangerous situation has occurred in the cleaner 100 when it is determined that an obstacle exists on the traveling path of the cleaner 100 based on the sensing result of the sensor 1400.

In another embodiment, the controller 1800 may determine that a dangerous situation has occurred in the cleaner 100 when it is determined that the wheel of the driving unit 1300 is restrained based on the sensing result of the sensor 1400.

In still another embodiment, the controller 1800 may determine that a dangerous situation has occurred in the cleaner 100 when it is determined that the wheel of the driving unit 1300 is idling based on the sensing result of the sensor 1400.

In yet still another embodiment, the controller 1800 may determine that a dangerous situation has occurred in the cleaner 100 when it is determined that one point of the main body of the cleaner 100 is spaced from the bottom of the cleaning area by a predetermined distance or more based on the sensing result of the sensor 1400.

In still yet another embodiment, the controller 1800 may determine that a dangerous situation has occurred in the cleaner 100 when it is determined that the main body has deviated from a traveling path based on the sensing result of the sensor 1400.

In yet still another embodiment, the controller 1800 may determine that a dangerous situation has occurred in the cleaner 100 when it is determined that the main body is unable to escape from a specific area for a predetermined time period or more based on the sensing result of the sensor 1400. In other word, the controller 1800 may determine that a dangerous situation has occurred in the cleaner 100 when it is determined that the cleaner 100 is trapped under the bed or in a narrow area.

In another embodiment, the controller 1800 may determine that a dangerous situation has occurred in the cleaner 100 when a significant difference is detected between a plurality of images captured at predetermined time intervals while the main body is not moving. Here, the controller 1800 may determine whether or not there is a significant difference between the plurality of images by comparing the pixel values included in the first image and the second image, respectively, among the plurality of images.

In still another embodiment, the controller 1800 may determine that a dangerous situation has occurred in the cleaner 100 when it is determined that an abnormal sound source is generated around the main body based on the sensing result of the sensor 1400.

Here, the memory 1700 of the cleaner 100 may store a sound source database including an abnormal sound source and a non-abnormal sound source.

For example, various noises that can be determined to be a situation where there is an intruder from the outside, such as a sound of falling or breaking of various objects, a sound of cracking of glass or the like, a drill rotating sound, a dog barking sound, an alarm sound generated by an alarm device having various sensors, and the like, may be stored as abnormal sound sources, and on the contrary, various noises that can occur irrespective of external intrusion, such as a noise generated from an inside of the robot cleaner 100, a noise generated from a home appliance such as a refrigerator, a washing machine, and a water purifier, and the like, may be stored as non-abnormal sound sources.

In this case, the controller 1800 may determine whether or not a sound source acquired through a sound acquisition device included in the sensor 1400 is similar to at least one sound source stored in the sound source database, thereby determining whether the acquired sound source is abnormal or non-abnormal sound source. In other words, the controller 1800 may calculate a similarity between a sound source acquired through the sound acquisition device and the sound sources stored in the sound source database, thereby determining the coincidence and/or similarity of the two sound sources.

The controller 1800 may control the sensor 1400 to periodically collect information related to the foregoing dangerous situations.

On the other hand, when the monitoring traveling of the cleaner 100 is not initiated by a user input but automatically initiated by the determination of the controller 1800, the controller 1800 may control the communication unit 1100 to transmit a message for notifying the start of monitoring traveling to at least one of the user terminal and the server. In particular, when the foregoing message is received from the cleaner 100, the user terminal may execute an application related to monitoring traveling to display a monitoring screen on the display of the terminal or display a button for confirming whether or not to execute the application on the screen of the terminal.

Referring to FIG. 6, the controller 1800 may control the camera to capture images at preset intervals (S602). In other words, when monitoring traveling is initiated, the controller 1800 may control the camera to capture images at predetermined time intervals.

In an embodiment, the controller 1800 may control the camera to capture a plurality of images while the main body of the cleaner 100 is positioned at one point.

In another embodiment, the controller 1800 may control the camera to capture a plurality of images in a state where a direction in which the camera is directed is fixed.

In still another embodiment, the controller 1800 may control the camera to capture a plurality of images while moving around a plurality of predetermined points within the cleaning area. Specifically, when the cleaner body is located at any one of the plurality of points, the controller 1800 may control the driving unit such that one side of the main body faces a direction set for each of the plurality of points. The controller 1800 may control the camera to capture images at preset intervals when one side of the main body faces the set direction.

On the other hand, when monitoring traveling is initiated, the controller 1800 may control the driving unit to strop the body of the cleaner 100 while the first image and the second image included in a comparison object are captured.

Furthermore, the controller 1800 may control the operation of the camera such that a direction in which the camera is directed is fixed while the first image and the second image included in a comparison object are captured. Furthermore, the controller 1800 may control the operation of the camera such that the camera does not perform zoom-in or zoom-out while the first image and the second image are captured.

In other words, while the plurality of images included in the comparison object are captured, the controller 1800 may stop the movement of the cleaner 100 or the rotation of the camera, thereby minimizing a difference due to the movement of the cleaner generated between the first image and the second image.

Next, the controller 1800 may determine whether a difference has occurred between the first image captured during a current period and the second image captured during a previous period (S603).

Specifically, the controller 1800 may compare a plurality of color values for each pixel included in the first image with a plurality of color values for each pixel included in the second image, respectively.

The controller 1800 can determine whether a difference has occurred between a portion of the first image and a portion of the second image when a point at which the first image is captured and a point at which the second image is captured are different from each other.

Furthermore, the controller 1800 may determine whether a difference has occurred between a portion of the first image and a portion of the second image when a direction in which the camera faces at a time point at which the first image is captured and a direction in which the camera faces at a time point at which the second image is captured are different from each other.

In addition, the controller 1800 may determine whether a difference has occurred between a portion of the first image and a portion of the second image when a first portion of the cleaning area corresponding to the first image and a second portion of the cleaning area corresponding to the second image are different.

Specifically, the controller 1800 may extract a portion of the first image and a portion of the second image, respectively, based on information related to the movement of the cleaner 100 from a time point at which the first image is captured to a time point at which the second image is captured. The controller 1800 may determine whether a difference has occurred between the extracted portion of the first image and the extracted portion of the second image.

The controller 1800 may detect a difference between a first direction in which the camera faces at a time point at which the first image is captured and a second direction in which the camera faces at a time point at which the second image is captured, and extract a portion of the first image and a portion of the second image, respectively, based on the detected difference.

In other words, a first portion of the cleaning area corresponding to the extracted portion of the first image may correspond to a second portion of the cleaning area corresponding to the extracted portion of the second image.

The controller 1800 may use information related to the movement history of the cleaner 100 from a time point at which the first image is captured to a time point at which the second image is captured to extract a portion of the first image and a portion of the second image as a comparison object. Furthermore, in order to extract a portion of the first image and a portion of the second image as a comparison object, the controller 1800 may compare a first set value, which is a set value of the camera at a time point at which the first image is captured, with a second set value, which is a set value of the camera at a time point at which the second image is captured.

Hereinafter, a point at which the first image is captured is defined as a first point, and a point at which the second image is captured is defined.

In addition, a time point at which the first image is captured is defined as a first time point, and a time point at which the second image is captured is defined as a second time point.

When the cleaner moves around a plurality of points to capture a plurality of images, the controller 1800 may allocate a plurality of images captured at the same point to any one of the comparison object groups.

Furthermore, when it is determined that a difference has occurred between the first image and the second image, the controller 1800 may generate a third image based on a difference between the first image and the second image (S604).

In an example, the controller 1800 may generate the third image by cropping a portion of the second image that is different from the first image. At this time, the controller 1800 may crop only a portion of the second image that is different from the first image or crop the smallest rectangle including a portion from which the difference is generated.

In another example, the third image may correspond to the second image. In other words, when a difference occurs between the second image and the first image, the controller 1800 may generate the third image by copying the second image.

On the other hand, when it is determined that there is no difference between the first image and the second image, the controller 1800 may perform again the process (S602) of capturing images at preset intervals. At this time, the previously captured first and second images may be deleted.

The controller 1800 may analyze the third image using a deep learning algorithm (S605).

In other words, the controller 1800 may detect information related to a subject of the third image using a deep learning algorithm.

For example, information related to the subject of the third image may include information related to whether the subject is an object or a creature.

In another example, the information related to the subject of the third image may include information related to a species corresponding to the subject when the subject is a creature.

In still another example, the information related to the subject of the third image may include information related to a name of the subject when the subject is an object.

In yet still another example, the information related to the subject of the third image may include information related to a size, a shape of the subject

In still yet another example, the information related to the subject of the third image may include information related to a number of objects.

Specifically, the controller 1800 may extract objects included in the third image and recognize the extracted objects using a deep learning algorithm. For example, the extracted objects may include a person or object, a place corresponding to a background, a time represented by the background (e.g., day or night), and the like.

The controller 1800 may compare the third image with a plurality of training data prestored in the memory 1700, respectively, by a deep learning algorithm to calculate a similarity between the training data and the third image.

At this time, the plurality of training data prestored in the memory 1700 may include training data for analyzing images.

For reference, the training data may be defined as data used by the controller 1800 when the controller 1800 drives a learning engine for analyzing a dangerous situation.

In other words, training data may include data collected by the cleaner 100 when a dangerous situation occurs in a plurality of other cleaners in the past. Specifically, training data may include coordinate information for a cleaning area, a sensing value related to an obstacle, and an image captured around the main body.

In an embodiment, the controller 1800 may use a deep learning algorithm to determine a similarity between a plurality of image information included in training data stored in the memory 1700 and the third image. The controller 1800 may detect information related to the subject of the third image based on the similarity determined as above.

On the other hand, the training data may be stored in the memory 1700 mounted on the cleaner or stored in the server 500. The controller 1800 may request training data from the server 500 when the analysis of the third image is required.

Furthermore, when training data is stored in the memory 1700, the controller 1800 may control the communication unit 1100 to transmit a training data update request to the server 500 to update the training data.

In an embodiment, the controller 1800 may transmit a training data update request to the server 500 whenever a difference occurs between the first image and the second image.

In another embodiment, the controller 1800 may send a training data update request to the server 500 whenever monitoring traveling is initiated.

In still another embodiment, the controller 1800 may transmit a training data update request to the server 500 when it is difficult to detect a subject corresponding to the third image.

In yet still another embodiment, the controller 1800 may transmit a training data update request to the server 500 to update training data at predetermined intervals.

Specifically, the controller 1800 may control the communication unit 1100 to transmit a training data update request to the server 500 when a predetermined time interval has passed from the latest update time of the training data. The controller 1800 may check the latest update time of the training data when a dangerous situation is sensed or may periodically check the latest update time of the training data regardless of the dangerous situation.

On the other hand, the training data update request includes identification information of the cleaner 100, information related to a version of training data stored in the memory 1700 of the cleaner 100, information related to a version of a learning engine mounted on the cleaner 100, identification information indicating a type of information related to the dangerous situation, and information related to a cleaning area in which the cleaner 100 is disposed.

The controller 1800 may determine whether or not the analysis result of the third image is subject to reporting (S606).

Specifically, when it is determined that the subject of the third image is a person or an animal, the controller 1800 may determine that the analysis result of the third image is subject to reporting.

Furthermore, when it is determined that the subject of the third image is an object obstructing the driving of the cleaner, the controller 1800 may determine that the analysis result of the third image is subject to reporting.

In addition, when it is determined that the subject of the third image is a flame or smoke generated in the cleaning area, the controller 1800 may determine that the analysis result of the third image is subject to reporting.

Furthermore, when it is determined that the subject of the third image is a window or door existing in the cleaning area, the controller 1800 may determine that the analysis result of the third image is subject to reporting.

Moreover, when it is determined that the subject of the third image is water existing in the cleaning area, the controller 1800 may determine that the analysis result of the third image is subject to reporting.

On the contrary, when it is determined that the subject of the third image is an object that does not affect the driving of the cleaner, the controller 1800 may determine that the analysis result of the third image is not included in a subject of report.

Furthermore, when it is determined that a difference between the first image and the second image is due to a change in an amount of light irradiated to the cleaning area, the controller1800 may determine that the analysis result of the third image is not included in a subject of report.

Moreover, when it is determined that the subject of the third image is a shadow, the controller 1800 may determine that the analysis result of the third image is not included in a subject of report.

Meanwhile, even when it is determined that the subject of the third image is a person or an animal, the controller 1800 may determine whether the third image corresponds to an image registered in advance, and determine that the analysis result of the third image is not included in a subject of report according to the analysis result of the third image.

When it is determined that the analysis result of the third image is subject to reporting, the controller 1800 may control the communication unit 1100 to transmit the analysis result of the third image and a warning message to at least one of the server 500 and the user terminal 200a (S607).

Specifically, when it is determined that the analysis result of the third image is subject to reporting, the controller 1800 may control the communication unit 1100 to transmit at least one of the first through third images to at least one of the server 500 and the user terminal 200b.

Furthermore, the controller 1800 may control the communication unit 1100 to transmit a warning message to at least one of the server 500 and the user terminal 200b to notify that a subject of report has occurred.

On the other hand, when it is determined that the analysis result of the third image is not included in a subject of report, the controller 1800 may control the camera to capture a new image. In other words, when it is determined that the analysis result of the third image is not included in a subject of report, the controller 1800 may perform again the process of capturing images at preset intervals. At this time, the previously captured first and second images and the previously generated third image may be deleted.

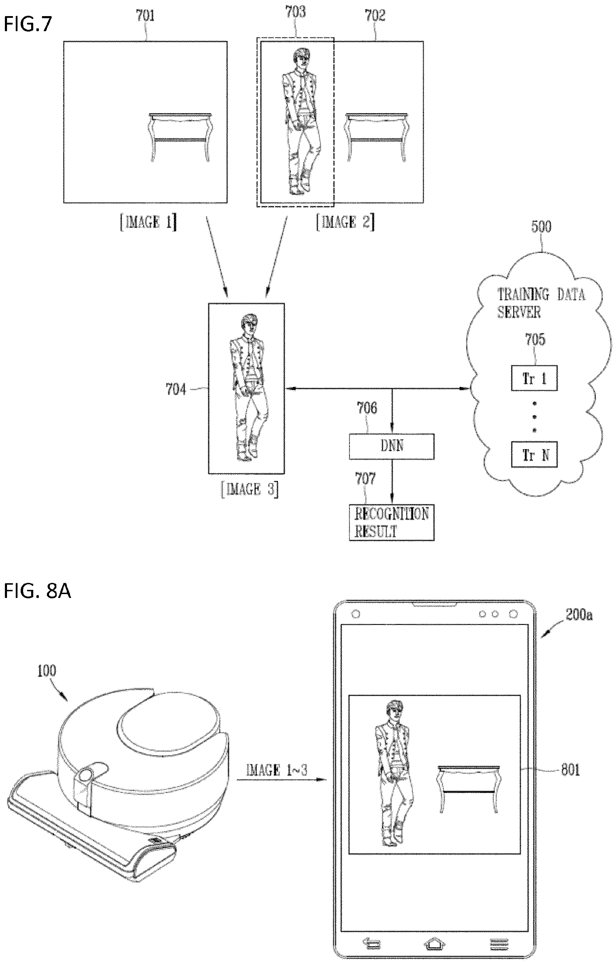

A method of detecting a difference between a plurality of images by a cleaner performing autonomous traveling according to an embodiment of the present invention will be described below with reference to FIG. 7.

Referring to FIG. 7, the camera of the cleaner 100 may capture the first image 701 and the second image 702 while the cleaner 100 performs monitoring traveling.

In other words, the controller 1800 may control the camera to capture images at preset intervals during monitoring traveling.

In an example, the set period may be changed by design.

In another example, the set period may be changed by a user input.

In still another example, the controller 1800 may reduce a period for which an image is captured when a difference occurs between the two previously captured images.

In yet still another example, the controller 1800 may reduce a period for which an image is captured when the difference generated in the two previously captured images is determined as a subject of report.

Furthermore, as illustrated in FIG. 7, the controller 1800 may compare the first image 701 with the second image 702 to detect a difference generated between the first image 701 and the second image 702.

Moreover, the controller 1800 may generate the third image 704 based on a difference generated between the first image 701 and the second image 702.

For example, the controller 1800 may generate the third image 704 by cropping a portion of the second image 702 that is different from the first image 701.

Referring to FIG. 7, the controller 1800 may include a deep learning algorithm unit 706 (DNN) for performing a deep learning algorithm and an image recognition unit 707.

The controller 1800 may compare the third image 704 with a plurality of training data 705 stored in the server 500 using a deep learning algorithm. The controller 1800 may detect at least one training data corresponding to the third image 704 among the plurality of training data 705. In addition, the controller 1800 may detect information related to the subject of the third image 704 using the label information of the detected training data.

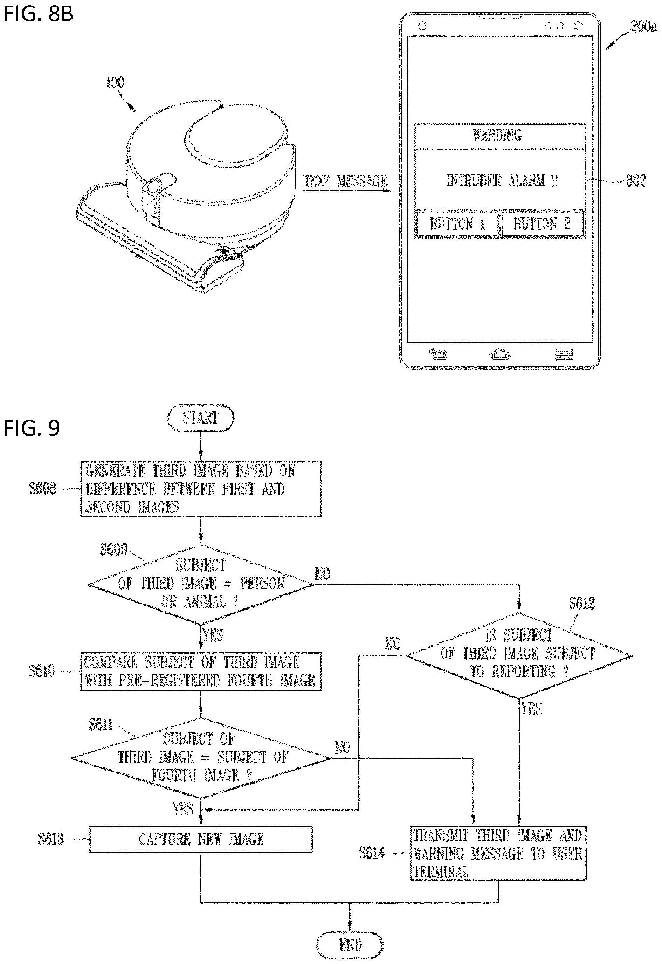

A method of transmitting a result of analyzing a difference detected between a plurality of images to a user terminal by a cleaner performing autonomous traveling according to an embodiment of the present invention will be described below with reference to FIGS. 8A and 8B.

Referring to FIG. 8A, when it is determined that information related to the subject of the third image 704 is subject to reporting, the controller 1800 may control the communication unit 1100 to transmit at least one of the first through third images to the user terminal 200a, 200b.

The user terminal 200a, 200b may display images received from the cleaner 100 on the display of the terminal. As illustrated in FIG. 8A, the display of the user terminal 200a, 200b may display a first window 801 displaying at least one of the images received from the cleaner 100.

Referring to FIG. 8B, when it is determined that information related to the subject of the third image 704 is subject to reporting, the controller 1800 may control the communication unit 1100 to transmit a warning message to the user terminal 200a, 200b.

The user terminal 200a, 200b may display the warning message received from the cleaner 100 on the display of the terminal. As illustrated in FIG. 8B, the display of the user terminal 200a, 200b may display a second window 802 displaying the warning message received from the cleaner 100.

The second window 802 may include a first button and a second button, and when a user input is applied to either one of the first and second buttons, the user terminal 200a, 200b may display an image received from the cleaner or display an image related to the cleaning area in real time from the cleaner 100.

A method of controlling a cleaner that performs autonomous traveling according to an embodiment of the present disclosure will be described below with reference to FIG. 9.

A method of capturing the first and second images mentioned in Fig. 9 will be replaced with the description related to FIG. 6.

Referring to FIG. 9, the controller 1800 may generate a third image based on a difference between the first and second images (S608).

The controller 1800 may determine whether or not the subject of the third image is a person or an animal (S609).

When it is determined that the subject of the third image is a person or an animal, the controller 1800 may compare the subject of the third image with a fourth image registered in advance by the user (S610).

Specifically, when it is determined that the subject of the third image is a person, the controller 1800 may detect a portion corresponding to a face of the person in the third image, and perform face recognition on the detected portion.

The controller 1800 may compare the third image and the fourth image registered in advance based on the result of face recognition.

However, the controller 1800 according to the present disclosure is not limited to the face recognition result, and may determine whether or not the subject of the third image and the subject of the fourth image correspond to each other. Here, the fourth image may include at least one of an image associated with the user of the cleaner and an animal related image allowed to exist in the cleaning area.

For example, the fourth image may include an image corresponding to the user of the cleaner 100.

In another example, the fourth image may include an image corresponding to a person entering the cleaning area where the cleaner 100 is present a predetermined number of times or more.

In still another example, the fourth image may include an image corresponding to a person residing in a cleaning area where the cleaner 100 is present.

In yet still another example, the fourth image may include an image corresponding to an animal raised in a cleaning area where the cleaner 100 is present.

On the other hand, when a predetermined user input is applied, the controller 1800 may control the camera included in the cleaner 100 to capture the fourth image. In other words, the user may apply a predetermined user input to the cleaner 100 to register information related to a person or an animal permitted to exist in the cleaning area, and when such a user input is applied, the controller 1800 may control the camera to capture the fourth image.

Furthermore, when a user input for registering information related to a person or an animal permitted to exist in the cleaning area is applied, the controller 1800 may control the communication unit 1100 to receive the fourth image from the user terminal 200a, 200b.

By the above process, the cleaner 100 according to the present disclosure may determine whether a person or an animal appearing in the cleaning area is a person or an animal allowed in the cleaning area.

Referring to FIG. 9, the controller 1800 may determine whether or not the subject of the third image corresponds to the subject of the fourth image (S611).

When it is determined that the subject of the third image corresponds to the subject of the fourth image, the controller 1800 may determine that the third image is not included in a subject of report.

Moreover, when it is determined that the subject of the third image corresponds to the subject of the fourth image, the controller 1800 may control the camera to capture a new image (S613).

In other words, when it is determined that the third image is not included in a subject of report, the controller 1800 may control the camera to capture a plurality of images at preset intervals.

When it is determined that the subject of the third image is not a person or an animal, the controller 1800 may determine whether the subject of the third image is subject to reporting (S612).

When it is determined that the subject of the third image is subject to reporting, the controller 1800 may control the communication unit 1100 to transmit the third image and a warning message to the user terminal 200a, 200b (S613).

When it is determined that the subject of the third image is not included in a subject of report, the controller 1800 may control the camera to capture a new image (S613).

On the other hand, though not shown in FIG. 9, when it is determined that the subject of the third image is a person or an animal, the controller 1800 may control the communication unit 110 to transmit information related to the subject of the third image to at least one of the server 500 and the user terminal 200a, 200b.

Furthermore, when it is determined that the subject of the third image is a person or an animal, the controller 1800 may control the communication unit 110 to transmit a warning message to at least one of the server 500 and the user terminal 200a, 200b.

Moreover, when it is determined that the subject of the third image corresponds to any of the fourth images stored in the memory 1700, the controller 1800 may cancel the process of transmitting information related to the subject of the third image to the server 500 and the user terminal 200a, 200b.

Then, when the process of transmitting information related to the subject of the third image to the server 500 and the user terminal 200a, 200b is canceled, the controller 1800 may resume an operation mode that has been carried out by the cleaner 100 prior to capturing the first and second images.

Furthermore, when the process of transmitting information related to the subject of the third image to the server 500 and the user terminal 200a, 200b is canceled, the controller 1800 may control the camera to capture new first and second images.

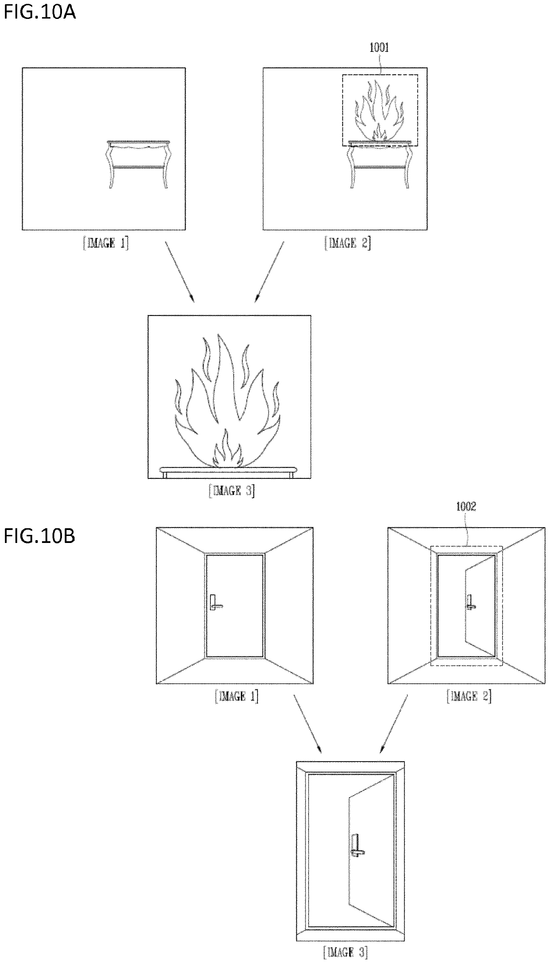

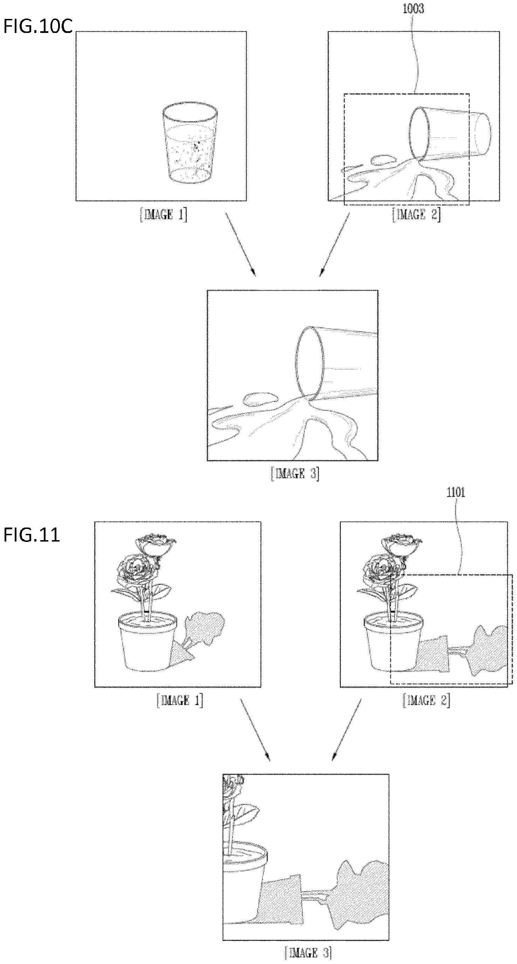

A method of determining whether or not the subject of the third image is subject to reporting will be described in more detail below with reference to FIGS. 10A through 10C and 11.

Various examples of the third image corresponding to a subject of report will be described below with reference to FIGS. 10A through 10C.

As illustrated in FIG. 10A, when it is determined that the subject of the third image is a flame or smoke 1001 generated in the cleaning area, the controller 1800 may determine that the subject of the third image is subject to reporting.

Specifically, when it is determined that the subject of the third image is a flame or smoke 1001, the controller 1800 may control the communication unit 110 to transmit information related to the subject of the third image to at least one of the server 500 and the user terminal 200a, 200b.

Furthermore, when it is determined that the subject of the third image is a flame or smoke 1001 generated in the cleaning area, the controller 1800 may transmit Information related to an address of the cleaning area and message information indicating whether or not a fire has occurred control the control server 1800 to a fire station control server (not shown) without going through the server 500 or the user terminal 200a, 200b.

As illustrated in FIG. 10B, when it is determined that the subject of the third image is a window or door 1002 existing in the cleaning area, the controller 1800 may determine that the subject of the third image is subject to reporting.

Specifically, the controller 1800 may compare the first and second images to determine whether the open or closed state of the window or door 1002 has been changed.

When it is determined that the open or closed state of the window or door 1002 has been changed, the controller1800 may control the communication unit 1100 to transmit at least one of the first through third images to at least one of the server 500 and the user terminal 200a, 200b.

As illustrated in FIG. 10C, when it is determined that the subject of the third image is water existing in the cleaning area, the controller 1800 may determine that the subject of the third image is subject to reporting.

Specifically, when it is determined that the subject of the third image is water existing in the cleaning area, the controller 1800 may compare a region in which the water is captured in the first image and a region in which the water is captured in the second image.

When a difference between a size of the region in which water is captured in the first image and a size of the region in which water is captured in the second image exceeds a preset reference value, the controller 1800 may determine that a water overflow has occurred in the cleaning region.

When it is determined that a water overflow has occurred in the cleaning region, the controller1800 may control the communication unit 1100 to transmit at least one of the first through third images to at least one of the server 500 and the user terminal 200a, 200b.

An example of the third image which does not correspond to a subject of report will be described below with reference to FIG. 11.

First, the controller 1800 may determine whether or not the subject of the third image affects the driving of the cleaner 100. When it is determined that the subject of the third image is an object that does not affect the driving of the cleaner 100, the controller 1800 may control the camera to capture a new image.

In an embodiment, when it is determined that a difference between the first image and the second image is due to a change in an amount of light irradiated to the cleaning area, the controller 1800 may determine that the subject of the third image is not included in a subject of report.

In another embodiment, when it is determined that a difference between the first image and the second image is due to a change in an angle of light irradiated to the cleaning area, the controller 1800 may determine that the subject of the third image is not included in a subject of report.

As illustrated in FIG. 11, when it is determined that the subject of the third image is a shadow 1101, the controller 1800 may determine that the subject of the third image is not included in a subject of report.

According to the foregoing cleaner that carries out autonomous traveling according to the present disclosure, only selected information may be delivered to the user, thereby obtaining an effect of improving the quality of monitoring traveling.

Furthermore, according to the present disclosure, monitoring traveling may be combined with a deep learning algorithm to transmit an optimal surveillance image to a user, thereby improving user convenience.

In addition, according to the present disclosure, the cleaner may perform machine learning, thereby obtaining an effect of monitoring a cleaning area without being limited to the performance at the time of fabrication or design.

## Claims

1. A cleaner for performing autonomous traveling, the cleaner comprising:
a main body;
a driving unit (1300) configured to move the main body;
a camera (130, 1400) configured to capture an image related to a cleaning area in which the main body is located;
a memory (1700) configured to store information related to a preset algorithm for analyzing the image;
a controller (1800) configured to detect a difference between a first image (701) and a second image (702) consecutively captured by the camera (130, 1400), **characterised in that** the controller being further configured to generate a third image (704) based on the detected difference, and analyze the generated third image (704) using the preset algorithm;
wherein the controller (1800) is configured to stop movement of the main body or rotation of the camera (130, 1400), while the first image (701) and the second image (702) are captured.

2. The cleaner of claim 1, wherein the controller (1800) is configured to detect information related to a subject of the third image (704) using the preset algorithm.

3. The cleaner of claim 2, wherein the memory (1700) is configured to store training data for the analysis of the image, and the controller (1800) is configured to determine a degree of similarity between a plurality of image information included in the training data and the third image (704) using the preset algorithm, and to detect information related to a subject of the third image (704) based on the determined degree of similarity.

4. The cleaner as claimed in any one of the preceding claims, further comprising: a communication unit (1100) configured to perform communication with the outside, wherein the controller (1800) is configured to control the communication unit (1100) to transmit information related to a subject of the third image (704) to at least one of a server (500) and a user terminal (200a, 200b) when it is determined that the subject of the third image (704) is a person or an animal.

5. The cleaner as claimed in any one of the preceding claims , wherein the controller (1800) is configured to control the communication unit (1100) to transmit a warning message (802) to a user terminal (200a, 200b) when it is determined that the subject of the third image (704) is a person or an animal.

6. The cleaner as claimed in any one of the preceding claims, further comprising: an input unit (1200) configured to receive a user input, wherein the controller (1800) is configured to control the memory (1700) to store at least one fourth image based on the user input, and to determine whether or not a subject of the third image (704) corresponds to any one of the fourth images stored in the memory (1700) when it is determined that the subject of the third image (704) is a person or an animal.

7. The cleaner of claim 6, wherein the controller (1800) is configured to cancel a process of transmitting information related to the subject of the third image (704) to the server (500) and/or the user terminal (200a, 200b) when it is determined that the subject of the third image (704) corresponds to any one of the fourth images stored in the memory (1700).

8. The cleaner of claim 7, wherein the controller (1800) is configured to resume an operation mode that has been carried out by the cleaner (100) prior to capturing the first and second images (701, 702) when the process of transmitting information related to the subject of the third image (704) to the server (500) and/or the user terminal (200a, 200b) is canceled.

9. The cleaner of claim 7 or 8, wherein the controller (1800) is configured to control the camera (130, 1400) to capture a new image when the process of transmitting information related to the subject of the third image (704) to the server (500) and/or the user terminal (200a, 200b) is canceled.

10. The cleaner as claimed in any one of the preceding claims 6-9, wherein the at least one fourth image comprises at least one of an image related to a user of the cleaner (100), and an image related to an animal allowed to exist in the cleaning area.

11. The cleaner as claimed in any one of the preceding claims 4-10, wherein the controller (1800) is configured to control the communication unit (1100) to transmit information related to a subject of the third image (704) to at least one of a server (500) and a user terminal (200a, 200b) when it is determined that the subject of the third image (704) is an object obstructing the driving of the cleaner (100).

12. The cleaner as claimed in any one of the preceding claims 4-11, wherein the controller (1800) is configured to control the communication unit (1100) to transmit information related to a subject of the third image (IMAGE3) to at least one of a server (500) and a user terminal (200a, 200b) when it is determined that the subject of the third image (image 3) is a flame or smoke (1001) generated in the cleaning area.

13. The cleaner as claimed in any one of the preceding claims 4-12, wherein when it is determined that the subject of the third image (IMAGE3) is a window or door (1002) existing in the cleaning area, the controller (1800) is configured to compare the first and second images (IMAGE1, IMAGE2) to determine whether or not the open or closed state of the window or door (1002) has been changed.

14. The cleaner of claim 13, wherein the controller (1800) is configured to control the communication unit (1100) to transmit at least one of the first through third images (IMAGE 1-IMAGE3) to at least one of a server (500) and a user terminal (200a, 200b) when it is determined that the open or closed state of the window or door (1002) has been changed.

15. The cleaner as claimed in any one of the preceding claims, wherein the controller (1800) is configured to compare a region in which water is captured in the first image (IMAGE1) with a region in which water is captured in the second image (IMAGE2) when a subject of the third image (IMAGE3) is water existing in the cleaning area.

## Patentansprüche

1. Reiniger zum Durchführen einer autonomen Bewegung, wobei der Reiniger Folgendes umfasst:
einen Hauptkörper;
eine Antriebseinheit (1300), die konfiguriert ist, den Hauptkörper zu bewegen;
eine Kamera (130, 1400), die konfiguriert ist, ein Bild bezüglich eines Reinigungsbereichs aufzunehmen, in dem sich der Hauptkörper befindet;
einen Speicher (1700), der konfiguriert ist, Informationen bezüglich eines voreingestellten Algorithmus zum Analysieren des Bilds zu speichern;
eine Steuerung (1800), die konfiguriert ist, einen Unterschied zwischen einem ersten Bild (701) und einem zweiten Bild (702) zu detektieren, die durch die Kamera (130, 1400) nacheinander aufgenommen wurden,
**dadurch gekennzeichnet, dass** die Steuerung ferner konfiguriert ist, ein drittes Bild (704) auf der Basis des detektierten Unterschieds zu erzeugen und das erzeugte dritte Bild (704) unter Verwendung des voreingestellten Algorithmus zu analysieren;
wobei die Steuerung (1800) konfiguriert ist, eine Bewegung des Hauptkörpers oder eine Drehung der Kamera (130, 1400) zu stoppen, während das erste Bild (701) und das zweite Bild (702) aufgenommen werden.

2. Reiniger nach Anspruch 1, wobei die Steuerung (1800) konfiguriert ist, Informationen bezüglich eines Subjekts des dritten Bilds (704) unter Verwendung des voreingestellten Algorithmus zu detektieren.

3. Reiniger nach Anspruch 2, wobei der Speicher (1700) konfiguriert ist, Übungsdaten für die Analyse des Bilds zu speichern, und wobei die Steuerung (1800) konfiguriert ist, einen Ähnlichkeitsgrad zwischen mehreren Bildinformationen, die in den Übungsdaten enthalten sind, und dem dritten Bild (704) unter Verwendung des voreingestellten Algorithmus festzustellen und Informationen bezüglich eines Subjekts des dritten Bilds (704) auf der Basis des festgestellten Ähnlichkeitsgrads zu detektieren.

4. Reiniger nach einem der vorhergehenden Ansprüche, der ferner Folgendes umfasst: eine Kommunikationseinheit (1100), die konfiguriert ist, eine Kommunikation mit der Außenwelt durchzuführen, wobei die Steuerung (1800) konfiguriert ist, die Kommunikationseinheit (1100) zu steuern, Informationen bezüglich eines Subjekts des dritten Bilds (704) an einen Server (500) und/oder ein Anwenderendgerät (200a, 200b) zu senden, wenn festgestellt wird, dass das Subjekt des dritten Bilds (704) eine Person oder ein Tier ist.

5. Reiniger nach einem der vorhergehenden Ansprüche, wobei die Steuerung (1800) konfiguriert ist, die Kommunikationseinheit (1100) zu steuern, eine Warnnachricht (802) an ein Anwenderendgerät (200a, 200b) zu senden, wenn festgestellt wird, dass das Subjekt des dritten Bilds (704) eine Person oder ein Tier ist.

6. Reiniger nach einem der vorhergehenden Ansprüche, der ferner Folgendes umfasst: eine Eingabeeinheit (1200), die konfiguriert ist, eine Anwendereingabe zu empfangen, wobei die Steuerung (1800) konfiguriert ist, den Speicher (1700) zu steuern, wenigstens ein viertes Bild auf der Basis der Anwendereingabe zu speichern und festzustellen, ob ein Subjekt des dritten Bilds (704) mit einem der vierten Bilder übereinstimmt, die in dem Speicher (1700) gespeichert sind, wenn festgestellt wird, dass das Subjekt des dritten Bilds (704) eine Person oder ein Tier ist.

7. Reiniger nach Anspruch 6, wobei die Steuerung (1800) konfiguriert ist, einen Vorgang zum Senden von Informationen bezüglich des Subjekts des dritten Bilds (704) an den Server (500) und/oder das Anwenderendgerät (200a, 200b) zu annullieren, wenn festgestellt wird, dass das Subjekt des dritten Bilds (704) mit einem der vierten Bilder, die in dem Speicher (1700) gespeichert sind, übereinstimmt.

8. Reiniger nach Anspruch 7, wobei die Steuerung (1800) konfiguriert ist, eine Betriebsart wiederaufzunehmen, die durch den Reiniger (100) vor dem Erfassen des ersten und zweiten Bilds (701, 702) ausgeführt worden ist, wenn der Vorgang zum Senden von Informationen bezüglich des Subjekts des dritten Bilds (704) an den Server (500) und/oder das Anwenderendgerät (200a, 200b) annulliert wurde.

9. Reiniger nach Anspruch 7 oder 8, wobei die Steuerung (1800) konfiguriert ist, die Kamera (130, 1400) zu steuern, ein neues Bild aufzunehmen, wenn der Vorgang zum Senden von Informationen bezüglich des Subjekts des dritten Bilds (704) an den Server (500) und/oder das Anwenderendgerät (200a, 200b) annulliert wurde.

10. Reiniger nach einem der vorhergehenden Ansprüche 6-9, wobei das wenigstens eine vierte Bild ein Bild, das sich auf einen Anwender des Reinigers (100) bezieht, und/oder ein Bild, das sich auf ein Tier bezieht, das sich in dem Reinigungsbereich aufhalten darf, umfasst.

11. Reiniger nach einem der vorhergehenden Ansprüche 4-10, wobei die Steuerung (1800) konfiguriert ist, die Kommunikationseinheit (1100) zu steuern, Informationen bezüglich eines Subjekts des dritten Bilds (704) an einen Server (500) und/oder ein Anwenderendgerät (200a, 200b) zu senden, wenn festgestellt wird, dass das Subjekt des dritten Bilds (704) ein Objekt ist, das die Bewegung des Reinigers (100) behindert.

12. Reiniger nach einem der vorhergehenden Ansprüche 4-11, wobei die Steuerung (1800) konfiguriert ist, die Kommunikationseinheit (1100) zu steuern, Informationen bezüglich eines Subjekts des dritten Bilds (IMAGE3) an einen Server (500) und/oder ein Anwenderendgerät (200a, 200b) zu senden, wenn festgestellt wird, dass das Objekt des dritten Bilds (image3) eine Flamme oder Rauch (1001) ist, der in dem Reinigungsbereich erzeugt wurde.

13. Reiniger nach einem der vorhergehenden Ansprüche 4-12, wobei dann, wenn festgestellt wird, dass das Subjekt des dritten Bilds (IMAGE3) ein Fenster oder eine Tür (1002) ist, die in dem Reinigungsbereich vorhanden sind, die Steuerung (1800) konfiguriert ist, das erste und das zweite Bild (IMAGE 1, IMAGE 2) zu vergleichen, um festzustellen, ob der offene oder geschlossene Zustand des Fensters oder der Tür (1002) verändert wurde.

14. Reiniger nach Anspruch 13, wobei die Steuerung (1800) konfiguriert ist, die Kommunikationseinheit (1100) zu steuern, wenigstens eines des ersten bis dritten Bilds (IMAGE1-IMAGE3) an einen Server (500) und/oder ein Anwenderendgerät (200a, 200b) zu senden, wenn festgestellt wird, dass der offene oder geschlossene Zustand des Fensters oder der Tür (1002) verändert worden ist.

15. Reiniger nach einem der vorhergehenden Ansprüche, wobei die Steuerung (1800) konfiguriert ist, einen Bereich, in dem im ersten Bild (IMAGE1) Wasser aufgenommen wurde, mit einem Bereich zu vergleichen, in dem im zweiten Bild (IMAGE2) Wasser aufgenommen wurde, wenn ein Subjekt des dritten Bilds (IMAGE3) Wasser ist, das in dem Reinigungsbereich vorhanden ist.

## Revendications

1. Appareil de nettoyage pour effectuer un déplacement autonome, l'appareil de nettoyage comportant :
un corps principal ;
une unité d'entraînement (1300) configurée pour déplacer le corps principal ;
un appareil de prise de vues (130, 1400) configuré pour capturer une image associée à une zone de nettoyage dans laquelle le corps principal est situé ;
une mémoire (1700) configurée pour stocker des informations associées à un algorithme prédéfini pour analyser l'image ;
une commande (1800) configurée pour détecter une différence entre une première image (701) et une deuxième image (712) capturées consécutivement par l'appareil de prise de vues (130, 1400), **caractérisé en ce que** la commande est en outre configurée pour générer une troisième image (704) basée sur la différence détectée, et analyser la troisième image (704) générée en utilisant l'algorithme prédéfini ;
dans lequel la commande (1800) est configurée pour arrêter un mouvement du corps principal ou une rotation de l'appareil de prise de vues (130, 1400), pendant que la première image (701) et la deuxième image (702) sont capturées.

2. Appareil de nettoyage selon la revendication 1, dans lequel la commande (1800) est configurée pour détecter des informations associées à un sujet de la troisième image (704) en utilisant l'algorithme prédéfini.

3. Appareil de nettoyage selon la revendication 2, dans lequel la mémoire (1700) est configurée pour stocker des données d'apprentissage en vue de l'analyse de l'image, et la commande (1800) est configurée pour déterminer un degré de similitude entre une pluralité d'informations d'image incluses dans les données d'apprentissage et la troisième image (704) en utilisant l'algorithme prédéfini, et pour détecter des informations associées à un sujet de la troisième image (704) sur la base du degré de similitude déterminé.

4. Appareil de nettoyage selon l'une quelconque des revendications précédentes, comportant en outre : une unité de communication (1100) configurée pour réaliser une communication avec l'extérieur, dans lequel la commande (1800) est configurée pour commander à l'unité de communication (1100) de transmettre des informations associées à un sujet de la troisième image (704) à au moins un élément parmi un serveur (500) et un terminal d'utilisateur (200a, 200b) lorsqu'il est déterminé que le sujet de la troisième image (704) est une personne ou un animal.

5. Appareil de nettoyage selon l'une quelconque des revendications précédentes, dans lequel la commande (1800) est configurée pour commander à l'unité de communication (1100) de transmettre un message d'avertissement (802) à un terminal d'utilisateur (200a, 200b) lorsqu'il est déterminé que le sujet de la troisième image (704) est une personne ou un animal.

6. Appareil de nettoyage selon l'une quelconque des revendications précédentes, comportant en outre : une unité d'entrée (1200) configurée pour recevoir une entrée d'utilisateur, dans lequel la commande (1800) est configurée pour commander à la mémoire (1700) de stocker au moins une quatrième image basée sur l'entrée d'utilisateur et pour déterminer si un sujet de la troisième image (704) correspond ou non à l'une quelconque des quatrièmes images stockées dans la mémoire (700) lorsqu'il est déterminé que le sujet de la troisième image (704) est une personne ou un animal.

7. Appareil de nettoyage selon la revendication 6, dans lequel la commande (1800) est configurée pour annuler un processus de transmission d'informations associées au sujet de la troisième image (704) au serveur (500) et/ou au terminal d'utilisateur (200a, 200b) lorsqu'il est déterminé que le sujet de la troisième image (704) correspond à l'une quelconque des quatrièmes images stockées dans la mémoire (1700).

8. Appareil de nettoyage selon la revendication 7, dans lequel la commande (1800) est configurée pour reprendre un mode de fonctionnement qui a été exécuté par l'appareil de nettoyage (100) avant de capturer les première et deuxième images (701, 702) lorsque le processus de transmission d'informations associées au sujet de la troisième image (704) au serveur (500) et/ou au terminal d'utilisateur (200a, 200b) est annulé.

9. Appareil de nettoyage selon la revendication 7 ou 8, dans lequel la commande (1800) est configurée pour commander à l'appareil de prise de vues (130, 1400) de capturer une nouvelle image lorsque le processus de transmission d'informations associées au sujet de la troisième image (704) au serveur (500) et/ou au terminal d'utilisateur (200a, 200b) est annulé.

10. Appareil de nettoyage selon l'une quelconque des revendications 6 à 9 précédentes, dans lequel la au moins une quatrième image comporte au moins une image parmi une image associée à un utilisateur de l'appareil de nettoyage (100), et une image associée à un animal autorisé à être présent dans la zone de nettoyage.

11. Appareil de nettoyage selon l'une quelconque des revendications 4 à 10 précédentes, dans lequel la commande (1800) est configurée pour commander à l'unité de communication (1100) de transmettre des informations associées à un sujet de la troisième image (704) à au moins un élément parmi un serveur (500) et un terminal d'utilisateur (200a, 200b) lorsqu'il est déterminé que le sujet de la troisième image (704) est un objet entravant l'entraînement de l'appareil de nettoyage (100).

12. Appareil de nettoyage selon l'une quelconque des revendications 4 à 11 précédentes, dans lequel la commande (1800) est configurée pour commander à l'unité de communication (1100) de transmettre des informations associées à un sujet de la troisième image (IMAGE3) à au moins un élément parmi un serveur (500) et un terminal d'utilisateur (200a, 200b) lorsqu'il est déterminé que le sujet de la troisième image (IMAGE3) est une flamme ou une fumée (1001) générée dans la zone de nettoyage.

13. Appareil de nettoyage selon l'une quelconque des revendications 4 à 12 précédentes, dans lequel lorsqu'il est déterminé que le sujet de la troisième image (IMAGE3) est une fenêtre ou une porte (1002) existant dans la zone de nettoyage, la commande (1800) est configurée pour comparer les première et deuxième images (IMAGE1, IMAGE2) pour déterminer si l'état ouvert ou fermé de la fenêtre ou de la porte (1002) a été changé ou non.

14. Appareil de nettoyage selon la revendication 13, dans lequel la commande (1800) est configurée pour commander à l'unité de communication (1100) de transmettre au moins une des première à troisième images (IMAGE1-IMAGE3) à au moins un élément parmi un serveur (500) et un terminal d'utilisateur (200a, 200b) lorsqu'il est déterminé que l'état ouvert ou fermé de la fenêtre ou de la porte (1002) a été changé.

15. Appareil de nettoyage selon l'une quelconque des revendications présentes, dans lequel la commande (1800) est configurée pour comparer une zone dans laquelle de l'eau est capturée dans la première image (IMAGE1), avec une zone dans laquelle de l'eau est capturée dans la deuxième image (IMAGE2) lorsqu'un sujet de la troisième image (IMAGE3) est l'eau présente dans la zone de nettoyage.
